# EUROPEAN PATENT SPECIFICATION

(11) **EP 2 478 736 B1**
(45) Date of publication and mention of the grant of the patent: **28.08.2013**
(21) Application number: 10766400.5
(22) Date of filing: 23.09.2010
(51) Int. Cl.: H04W 72/04

(54) **METHOD AND APPARATUS FOR CONTROLLING SWITCHING BETWEEN RESOURCES AND/OR COMMUNICATING RESOURCE CHANGE INFORMATION IN A WIRELESS COMMUNICATIONS SYSTEM**
VERFAHREN UND VORRICHTUNG ZUR STEUERUNG DER UMSCHALTUNG ZWISCHEN BETRIEBSMITTEL UND/ODER ZUR KOMMUNIKATION VON BETRIEBSMITTELÄNDERUNGSINFORMATIONEN IN EINEM DRAHTLOSEN KOMMUNIKATIONSSYSTEM
PROCÉDÉS ET APPAREIL DE COMMANDE DE COMMUTATION ENTRE DES RESSOURCES ET/OU DE COMMUNICATION D'INFORMATIONS DE CHANGEMENT DE RESSOURCE DANS UN SYSTÈME DE COMMUNICATIONS SANS FIL

(30) Priority: 17.09.2009 US 561953
(43) Date of publication of application: 25.07.2012
(73) Proprietor: Qualcomm Incorporated, San Diego, CA 92121-1714 (US)
(72) Inventor: RICHARDSON, Thomas, J., San Diego, CA 92121-1714 (US); WU, Xinzhou, San Diego, CA 92121-1714 (US); LI, Junyi, San Diego, CA 92121-1714 (US)
(74) Representative: Wegner, Hans
(86) International application number: PCT/US2010/049936
(87) International publication number: WO 2011/035340

(56) References cited:
- US-A1- 2007 070 918
- US-A1- 2008 144 524

## Description

### FIELD

Various embodiments relate to wireless communications, and more particularly, to methods and apparatus which can be used for controlling switching between resources and/or communicating resource change information in a wireless communications system.

### BACKGROUND

In many conventional cellular wireless communications networks, transmission power over a plurality of wireless links is controlled in a centralized manner. For example, a base station or central controller device may coordinate communications corresponding to a plurality of mobiles which are using the base station as a point of network attachment in the communications system. The base station and/or central controller manages resource allocation and communications corresponding to a plurality of mobiles competing for the limited air link resources, e.g., granting or denying access, assigning air link resources to mobiles, tracking mobile position, measuring communications channels, controlling transmission power levels, controlling data rates, managing interference, and/or switching a mobile between different resources. The base station and/or centralized control device can, and generally does, perform closed loop power and timing control operations as part of the management and control of mobile transmissions. The base station's antenna is generally situated such as to provide good channel conditions between the base station and mobiles. The base station and/or centralized controller has a good overall view of the situation in a cell, and it can effectively manage communications corresponding to a plurality of different links between mobiles and the base station, e.g., deciding when a mobile should be allocated to use a particular resource and when a mobile should be switched to another resource.

In the field of wireless communications there has been a trend to make spectrum available for use by various types of networks in addition to conventional cellular networks. One such network type which has been gaining in popularity and utilization is a peer to peer network, e.g., peer to peer networks lacking centralized control. It is desirable that a peer to peer network be able to support reliable communications over a wide range of distances. It is also desirable that a communications device which makes its own resource usage decisions, be able to adapt to changing conditions, e.g., a change in the number of mobiles competing for the resources, changes in positions of the mobiles, changes in interference levels, detection of collisions, changes in ability to decode a received signal and/or the detection of jamming signals. In a decentralized network it is advantageous that peer devices in the network be kept situationally aware of the current resource allocation decisions of other peers.
US 2008/144524 A1 relates to distributed dynamic channel selection in a communication network. A node in a network is adapted to: (1) spontaneously and independent of a centralized controller associated with the network, transmit a probe message to one or more of the other nodes for purposes of forming or reforming a network; (2) receive a probe message from a second node, the probe message including values for the variables for the second node; (3) compare the values for the variables for the first node to the values for the variables for the second node within the probe message to determine, independent of a centralized controller associated with the network, whether the first node should set itself to a new channel; and (4) if so, set the first node to the new channel. Each node in a dynamic channel selection group of nodes individually decides when to change transceiver channels, in particular based on control message exchanges with other nodes.
US 2007/0070918 A1 discloses a similar method.

Based on the above discussion there is a need for new methods and apparatus that can facilitate resource management and/or communication of resource change information.

### SUMMARY

Various embodiments relate to wireless communications, and more particularly, to methods and apparatus which can be used for controlling switching between resources and/or communicating resource change information in a wireless communications system. Various methods and apparatus are well suited for use in a decentralized wireless communications network, such as a decentralized peer to peer wireless network, where an individual communications device self allocates resources and makes resource switching decisions.

For example, a first communications device may allocate itself a first air link resource associated with a first identifier in a set of possible alternative air link resources, each alternative resource associated with a different identifier. The first communications device may use the first resource to transmit signals. Other peer devices may receive the transmitted signals from the first communications device and track that the first communications device has acquired and is using the first communications resource. The first communications device may hold onto and use this first communications resource until a point in time where the first communications device switches to another communications resource, e.g., due to interference.

Consider that conditions may change over time, e.g., the first communications device may detect: a change in loading, changes in received power levels on other resources, a collision on the first communications resource, a high level of interference on the first communications resource, and/or an intentional jamming signal on the first communications resource. The first communications device may decide that there is a need to adapt to the detected changing condition. Adapting to changing conditions, at times, may include deciding to switch from the first communications resource corresponding to a first identifier to a second communications resource corresponding to a second identifier. In some such embodiments, the first communications device generates and transmits a broadcast change signal indicating a change from the first communications resource associated with the first identifier to the second communications resource associated with the second identifier. Other peer devices monitoring for signals from the first device can receive and recover the resource change signal and continue tracking the first communications device's information stream in an uninterrupted manner by switching from monitoring the first communications resource to monitoring the second communications resource. In some embodiments, the resource change signal is communicated on the first communications resource, e.g., as the last signal before the switch. A peer device may desire to track and recover information from a limited number of devices to save power consumption and/or to have a low computational complexity design implementation which may reduce size and/or cost. This approach allows a peer device, selectively monitoring a limited number of resources in the set of possible alternative resources, to seamlessly maintain its desired tracking when one of the devices being tracked, e.g. the first communications device, switches from the first communications resource to the second communications resource.

In one exemplary embodiment, the communications resources are peer discovery communications resources. The peer discovery communications resources are, e.g., groupings of time-frequency air link transmission units in a peer to peer recurring timing structure to be used to convey peer discovery signals, wherein different groupings of units correspond to different identifiers. In some embodiments, the characteristics of the peer discovery signals, e.g., the inclusion of a pseudo-randomly placed intentional NULL, facilitates power measurements and interference measurements in a decentralized system in which resources may be, and sometimes are reused. In various embodiments, the power measurement and/or interference information is used in making a resource switching decision and/or setting a resource switching threshold value.

An exemplary method of operating a communications device, in accordance with some embodiments, comprises: deciding to switch from a first communications resource corresponding to a first identifier to a second communications resource corresponding to a second identifier; and broadcasting a resource change signal indicating a change from using the first communications resource to the second communications resource. An exemplary communications device, in accordance with some embodiments, comprises: at least one processor configured to: decide to switch from a first communications resource corresponding to a first identifier to a second communications resource corresponding to a second identifier; and broadcast a resource change signal indicating a change from using the first communications resource to the second communications resource. The exemplary communications device further comprises memory coupled to said at least one processor.

While various embodiments have been discussed in the summary above, it should be appreciated that not necessarily all embodiments include the same features and some of the features described above are not necessary but can be desirable in some embodiments. Numerous additional features, embodiments and benefits of various embodiments are discussed in the detailed description which follows.

### BRIEF DESCRIPTION OF THE FIGURES

Figure 1 is a drawing of an exemplary wireless communications system in accordance with an exemplary embodiment.

Figure 2A is a first part of a flowchart of an exemplary method of operating a communications device in accordance with an exemplary embodiment.

Figure 2B is a second part of a flowchart of an exemplary method of operating a communications device in accordance with an exemplary embodiment.

Figure 3 is a drawing of an exemplary communications device, in accordance with an exemplary embodiment.

Figure 4 is an assembly of modules which can, and in some embodiments is, used in the communications device illustrated in Figure 3.

Figure 5 is a drawing illustrating an exemplary recurring peer to peer timing structure used in some embodiments.

Figure 6 is a drawing of an exemplary discovery resource block where there are nine individual peer discovery resources in the block associated with different peer discovery resource identifiers.

Figure 7 is a drawing illustrating an exemplary peer to peer wireless communications system including a plurality of wireless communications devices implementing a peer to peer timing structure and supporting peer to peer signaling in which a wireless terminal is seeking to acquire a peer discovery resource identifier associated with peer discovery air link resources.

Figure 8 is a drawing illustrating the system of Figure 7 in which the wireless terminal has acquired a peer discovery resource identifier and is using peer discovery air link resources corresponding to the identifier to transmit a peer discovery signal.

Figure 9 is a drawing illustrating that conditions have changed in the exemplary system since the situation of Figure 8, and that a wireless terminal decides not to switch to a new identifier.

Figure 10 is a drawing illustrating that conditions have changed in the exemplary system since the situation of Figure 9, and that a wireless terminal decides to switch to a new identifier associated with different peer discovery air link resources.

Figure 11 is a drawing illustrating that the wireless terminal, which has decided to switch to a new identifier associated with different peer discovery resources, communicates a resource change signal as the last signal communicated on the resources associated with old identifier.

Figure 12 is a drawing illustrating that the wireless terminal, which has decided to switch to a new identifier associated with different peer discovery resources, communicates a resource change signal as the first signal communicated on the resources associated with new identifier.

Figure 13 is a drawing illustrating that the wireless terminal which has switched identifiers subsequently transmits its peer discovery signals on the air link resources associated with the new identifier.

Figure 14 is a drawing illustrating exemplary peer discovery signals being transmitted on the same peer discovery resource from two devices, and is used to describe various advantages to this approach in regards to measuring interference.

Figure 15 is a drawing illustrating exemplary peer discovery signals being transmitted on the same peer discovery resource from two devices, and is used to describe various advantages to this approach in regards to measuring received power corresponding to the different transmitted signals.

Figure 16 is a drawing illustrating exemplary resource information which is determined based on received power measurements, stored, and used for resource selection and/or resource switching determinations in accordance with some embodiments.

### DETAILED DESCRIPTION

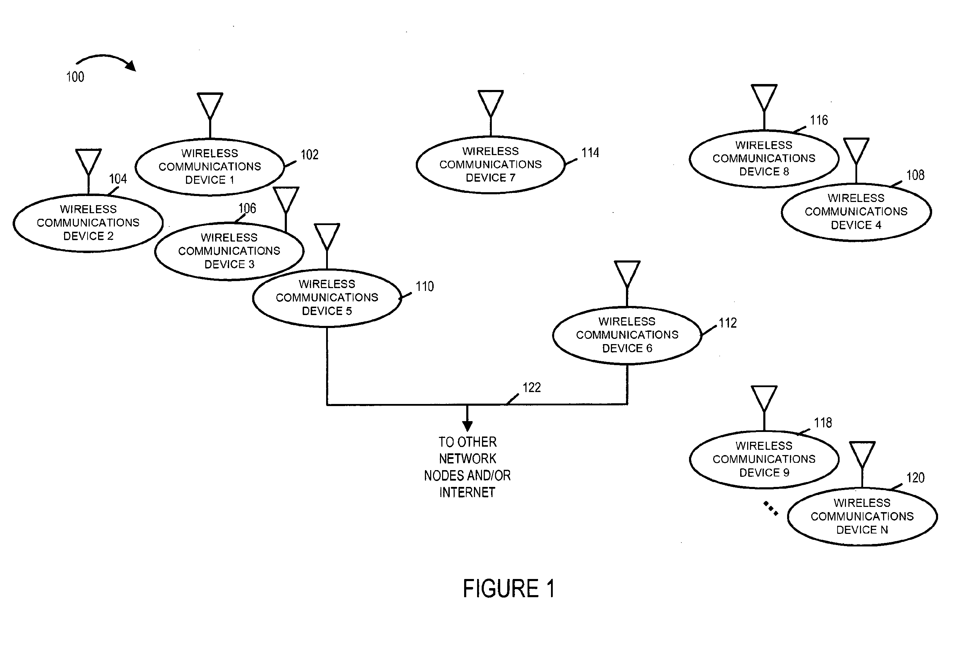

Figure 1 is a drawing of an exemplary wireless communications system 100 in accordance with an exemplary embodiment. Exemplary wireless communications system 100 includes a plurality of wireless communications devices (wireless communications device 1 102, wireless communications device 2 104, wireless communications device 3 106, wireless communications device 4 108, wireless communications device 5 110, wireless communications device 6 112, wireless communications device 7 114, wireless communications device 8 116, wireless communications device 9 118, ... , wireless communications device N 120. Some of the wireless communications devices of system 100, e.g., device 5 110 and device 6 112, are coupled to other network nodes and/or the Internet via backhaul network 122. Some of the wireless communications devices of system 100 are mobile devices, e.g., devices (102, 104, 106, 108, 114, 116, 118, 120).

The wireless communications devices (102, 104, 106, 108, 110, 112, 114, 116, 118, 120) support peer to peer communications and implements a peer to peer timing structure. The peer to peer communications system implements a decentralized approach to resource allocation. An exemplary air link resource is, e.g., a set of time-frequency transmission units associated with a resource identifier. One type of air link resource, in some embodiments, is a peer discovery air link resource. An individual wireless communications device makes a decision, based on its perspective, as to whether or not a resource can be used. The individual wireless communications device also makes a decision, based on its perspective, as to whether or not it may continue to use a resource it is currently using or whether it should switch to another resource. The wireless communications device generates and broadcasts a resource change signal in response to a decision to switch to a different resource, e.g., a decision to switch from a first communications resource corresponding to a first identifier to a second communications resource corresponding to a second identifier.

Peer discovery signals, conveyed on peer discovery air link resources, may include signals conveying private and/or public identifiers associated with a wireless communications device. Through peer discovery operations a wireless communications device may find other wireless communications devices of interest. For example, a wireless communications device may search for private and/or public identifiers corresponding friends, relatives, business associates, group members, common interests, businesses, services, etc. A wireless communications device may monitor for discovery signals, decode detected discovery signals and check recovered identifiers against identifiers of interest. Based on a match the wireless communications device may establish a peer to peer connection and/or communicate peer to peer traffic channel signals. In some embodiments, a resource change signal communicating a decision to switch from a first peer discovery air link resource associated with a first identifier to a second peer discovery air link resource associated with a second identifier is also conveyed on a peer discovery air link resource.

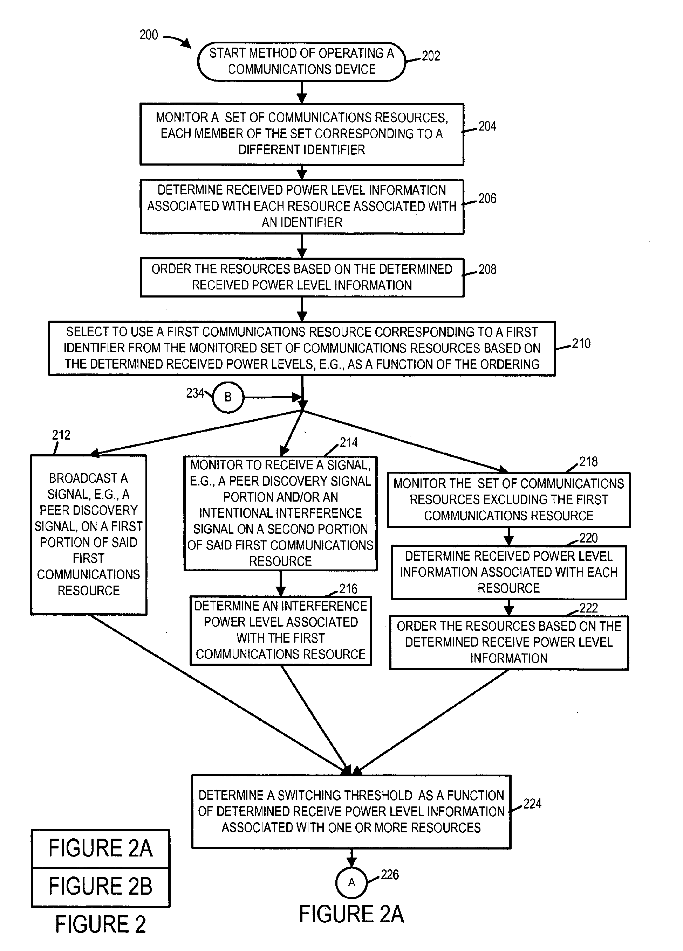

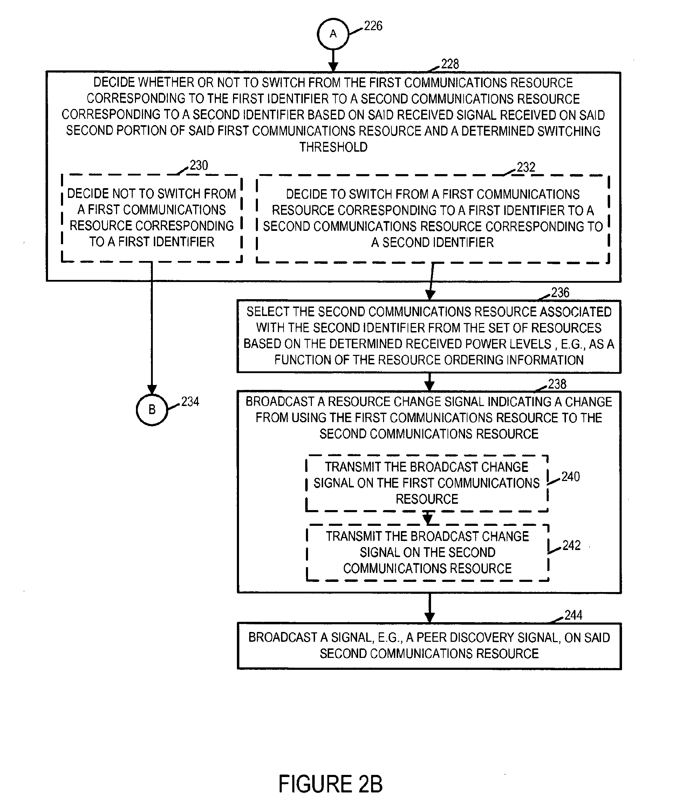

Figure 2, comprising the combination of Figure 2A and Figure 2B, is a flowchart 200 of an exemplary method of operating a communications device in accordance with an exemplary embodiment. Operation starts in step 202, where the communications device is powered on and initialized and proceeds to step 204. In step 204 the communications device monitors a set of communications resources, each member of the set corresponding to a different identifier. Operation proceeds from step 204 to step 206.

In step 206 the communications device determines received power level information associated with each resource associated with an identifier. Then, in step 208 the communications device orders the resources based on the determined received power level information. Operation proceeds from step 208 to step 210.

In step 210 the communications device selects to use a first communications resource corresponding to a first identifier from the monitored set of communications resources based on the determined received power levels, e.g., as a function of the ordering. Operation proceeds from step 210 to steps 212, 214 and 218.

In step 212 the communications device broadcasts a signal, e.g., a peer discovery signal, on a first portion of said first communications resource. Operation proceeds from step 212 to step 224.

Returning to step 214, in step 214 the communications device monitors to receive a signal, e.g., a peer discovery signal portion and/or an intentional interference signal on a second portion of said first communications resource. Operation proceeds from step 214 to step 216. In step 216 the communications device determines an interference power level associated with the first communications resource. Operation proceeds from step 216 to step 224.

Returning to step 218, in step 218 the communications device monitors the set of communications resources excluding the first communications resource. Operation proceeds from step 218 to step 220. In step 220 the communications device determines received power level information associated with each resource. In some embodiments, in step 220 corresponding to a resource, the communications device determines a total received power level and a strongest received signal power level. Then, in step 222 the communications device orders the resources based on the determined received power level information. Operation proceeds from step 222 to step 224.

In step 224 the communications device determines a switching threshold as a function of determined receive power level information associated with one or more resources. In some embodiments, in step 224 the communications device determines the switching threshold as a function of both the determined interference power level of step 214 and the determined receive power level information of step 220. Operation proceeds from step 224 via connecting node A 226 to step 228.

In step 228 the communications device decides whether or not to switch from the first communications resource corresponding to the first identifier to a second communications resource corresponding to a second identifier based on said received signal received on said second portion of said first communications resource and a determined switching threshold.

Step 228 includes steps 230 and 232, of which one is performed for each iteration of step 228. In step 230 the communications decides not to switch from a first communications resource corresponding to a first identifier. Operation proceeds from step 230 via connecting node B 234 to steps to 212, 214 and 216.

Returning to step 232, in step 232 the communications device decides to switch from a first communications resource corresponding to a first identifier to a second communications resource corresponding to a second identifier. Operation proceeds from step 232 to step 236. In step 236 the communications device selects the second communications resource associated with the second identifier from the set of resources based on the determined received power level information, e.g., as a function of the resource ordering information. Operation proceeds from step 236 to step 238.

In step 228 the communications device broadcasts a resource change signal indicating a change from using the first communications resource to the second communications resource. Step 238 includes one or more of steps 240 and 242. In step 240 the communications device transmits the broadcast change signal on the first communications resource. In some embodiments, the resource change signal is the last signal transmitted on said first communications resource by the communications device. In step 242 the communications device transmits the broadcast change signal on the second communications resource. In some embodiments, the resource change signal is the first signal transmitted on the second communications resource by the communications device.

In some embodiments, broadcasting the resource change signal includes transmitting the broadcast change signal on only one of the first and second communications resources. In some other embodiments, broadcasting the resource change signal includes transmitting the broadcast change signal on both the first and second communications resources.

Operation proceeds from step 228 to step 244. In step 244 the communications device broadcasts a signal, e.g., a peer discovery signal on a portion of the second communications resource.

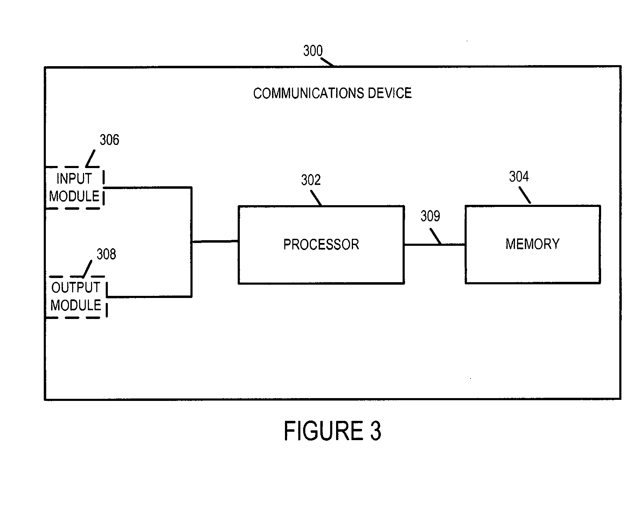

Figure 3 is a drawing of an exemplary communications device 300, in accordance with an exemplary embodiment. Exemplary communications device 300 is, e.g., one of the wireless communications devices of Figure 1. Exemplary communications device 300 may, and sometimes does, implement a method in accordance with flowchart 200 of Figure 2.

Communications device 300 includes a processor 302 and memory 304 coupled together via a bus 309 over which the various elements (302, 304) may interchange data and information. Communications device 300 further includes an input module 306 and an output module 308 which may be coupled to processor 302 as shown. However, in some embodiments, the input module 306 and output module 308 are located internal to the processor 302. Input module 306 can receive input signals. Input module 306 can, and in some embodiments does, include a wireless receiver and/or a wired or optical input interface for receiving input. Output module 308 may include, and in some embodiments does include, a wireless transmitter and/or a wired or optical output interface for transmitting output.

Processor 302 is configured to decide to switch from a first communications resource corresponding to a first identifier to a second communications resource corresponding to a second identifier; and broadcast a resource change signal indicating a change from using the first communications resource to the second communications resource. In various embodiments, processor 302 is configured to transmit the broadcast resource change signal on the first communications resource as part of being configured to broadcast the resource change signal. In some such embodiments, said resource change signal is the last signal transmitted on said first communications resource by said communications device. In some embodiments, processor 302 is configured to transmit the broadcast resource change signal on the second communications resource as part of being configured to broadcast the resource change signal. In some such embodiments, said resource change signal is the first signal transmitted on said second communications resource by said communications device. In various embodiments, processor 302 is configured to transmit on the first communications resource and transmit on the second communications resource as part of being configured to broadcast the resource change signal.

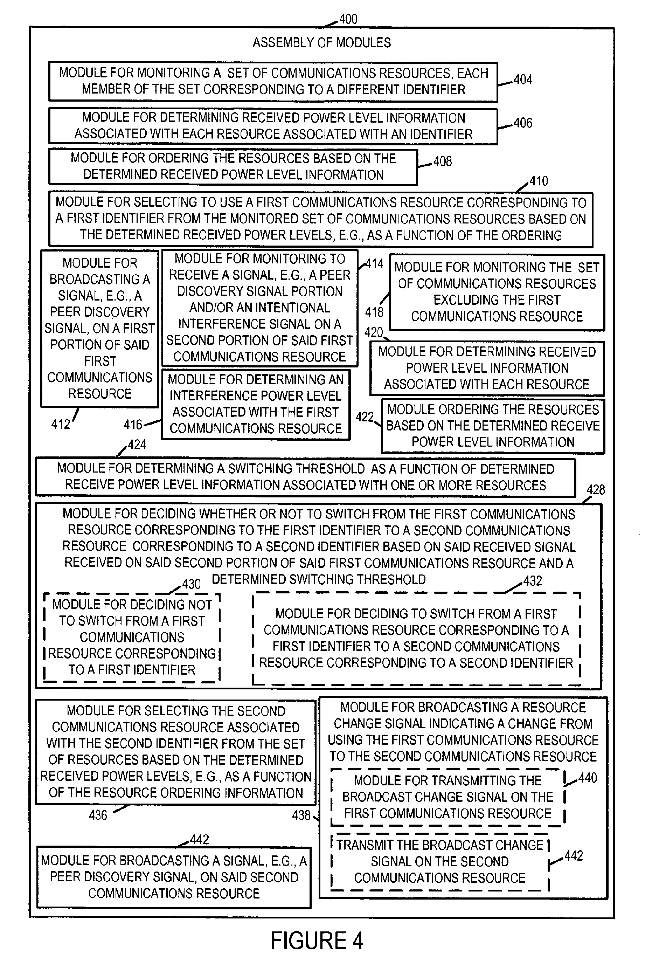

Figure 4 is an assembly of modules 400 which can, and in some embodiments is, used in the communications device 300 illustrated in Figure 3. The modules in the assembly 400 can be implemented in hardware within the processor 302 of Figure 3, e.g., as individual circuits. Alternatively, the modules may be implemented in software and stored in the memory 304 of the communications device 300 shown in Figure 3. While shown in the Figure 3 embodiment as a single processor, e.g., computer, it should be appreciated that the processor 302 may be implemented as one or more processors, e.g., computers. When implemented in software the modules include code, which when executed by the processor, configure the processor, e.g., computer, 302 to implement the function corresponding to the module. In some embodiments, processor 302 is configured to implement each of the modules of the assembly of modules 400. In embodiments where the assembly of modules 400 is stored in the memory 304, the memory 304 is a computer program product comprising a computer readable medium comprising code, e.g., individual code for each module, for causing at least one computer, e.g., processor 302, to implement the functions to which the modules correspond.

Completely hardware based or completely software based modules may be used. However, it should be appreciated that any combination of software and hardware (e.g., circuit implemented) modules may be used to implement the functions. As should be appreciated, the modules illustrated in Figure 4 control and/or configure the communications device 300 or elements therein such as the processor 302, to perform the functions of the corresponding steps illustrated in the method flowchart 200 of Figure 2.

Assembly of modules 400 includes a module 404 for monitoring a set of communications resources, each member of the set corresponding to a different identifier, a module 406 for determining received power level information associated with each resource associated with an identifier, a module 408 for ordering the resources based on the determined received power level information, and a module 410 for selecting to use a first communications resource corresponding to a first identifier from the monitored set of communications resources based on the determined received power levels, e.g., as a function of the ordering. Assembly of modules 400 further includes: a module 412 for broadcasting a signal, e.g., a peer discovery signal, on a first portion of said first communications resource, a module 414 for monitoring to receive a signal, e.g., a peer discovery signal portion and/or an interference signal on a second portion of said first communications resource, a module 416 for determining an interference power level associated with the first communications resource, a module 418 for monitoring the set of communications resources excluding the first communications resource, a module 420 for determining received power level information associated with each resource, and a module 422 for ordering the resources based on the determined receive power level information.

Assembly of module 400 further includes: a module 424 for determining a switching threshold as a function of determined receive power level information associated with one or more resources, and a module 428 for deciding whether or not to switch from the first communications resource corresponding to a first identifier to a second communications resource corresponding to a second identifier based on said received signal received on said second portion of said first communications resource and a determined switching threshold. Module 428 includes a module 430 for deciding not to switch from a first communications resource corresponding to a first identifier and a module 432 for deciding to switch from a first communications resource corresponding to a first identifier to a second communications resource corresponding to a second identifier. In some embodiments, module 424 determines a switching threshold as a function of both a determined interference power level from module 416 and determined received power level information from module 420.

Assembly of modules 400 further includes: a module 436 for selecting the second communications resource associated with the second identifier from the set of resources based on the determined received power levels, e.g., as a function of resource ordering information, a module 438 for broadcasting a resource change signal indicating a change from using the first communications resource to using the second communications resource, and a module 444 for broadcasting a signal, e.g., a peer discovery signal, on a portion of the second communications resource. Module 438 includes one or more of a module 440 for transmitting the broadcast change signal on the first communications resource, and a module 442 for transmitting the broadcast change signal on the second communications resource.

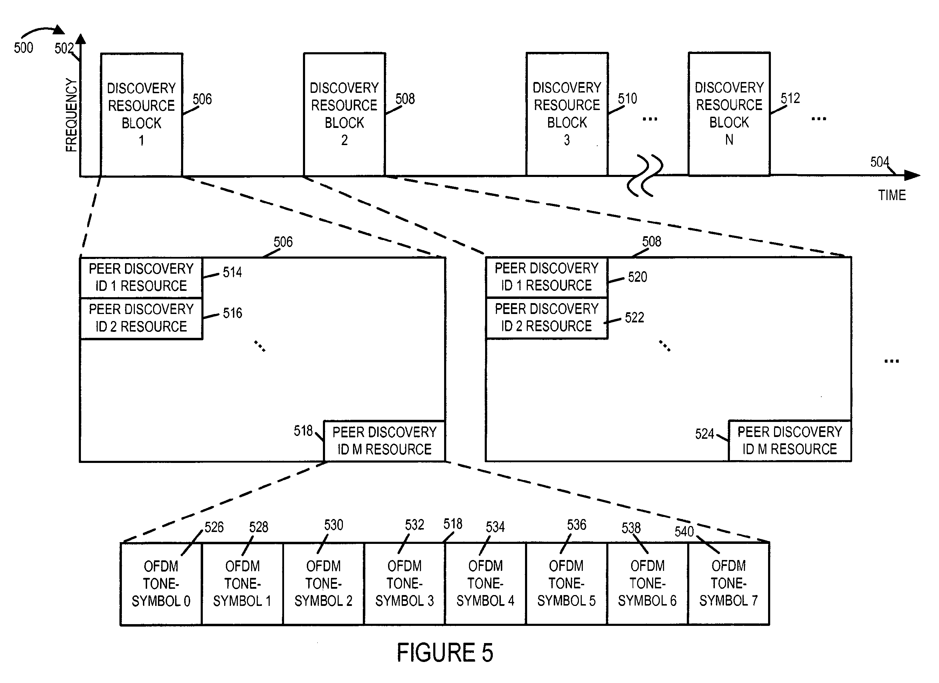

Figure 5 is a drawing illustrating an exemplary recurring peer to peer timing structure used in some embodiments. Plot 500 includes a vertical axis 502 representing frequency, e.g., orthogonal frequency division multiplexing (OFDM) tones, and a horizontal axis 504 representing time, e.g., OFDM symbol transmission time intervals. In the example of Figure 5 the air link resources of the timing structure include discovery resource blocks (discovery resource block 1 506, discovery resource block 2 508, discovery resource block 3 510, ... , discovery resource block N 512).

Each discovery resource block (506, 508, 510,..., 512) includes individual peer discovery resources, e.g., segments, associated with different peer discovery identifiers. In this example, there are M peer discovery resource identifiers and each identifier is associated with an individual peer discovery resource, e.g., segment, in the block, and M is a positive integer. In some embodiments M is a predetermined value which is greater than 99. Discovery resource block 1 506 includes peer discovery ID 1 resource 514, peer discovery ID 2 resource 516, ...., peer discovery ID M resource 518. Similarly, discovery resource block 2 508 includes peer discovery ID 1 resource 520, peer discovery ID 2 resource 522, ..., peer discovery ID M resource 524.

In this example, each individual peer discovery resource of a peer discovery block, e.g., peer discovery ID M resource 518, is a contiguous set of resources. In some embodiments, an individual peer discovery resource may, and sometimes does, include non-contiguous portions, e.g., a first portion associated with a first tone and a second portion associated with a second tone, where the first and second tones are not adjacent tones. In this example, a peer discovery resource associate with a particular peer discovery ID is located in the same relative position in each of the peer discovery resource blocks. For example, peer discovery ID 1 resource 514 of peer discovery resource block 506 is in the uppermost corner, e.g., high frequency and first time slot, and peer discovery ID 1 resource 520 of discovery resource block 2 508 is also in the uppermost corner. In some embodiments, the relative position of the individual resource associated with a particular peer discovery identifier may, and sometimes does, change from one discovery resource block to another, e.g., in accordance with a hopping pattern known to the peer to peer wireless communications devices. Variation of the relative position of a resource associated with a particular peer discovery resource identifier from one discovery resource block to another can be advantageous in determining received power information and/or interference information, e.g., particularly in situations where two devices may be transmitting concurrently on the same peer discovery resource.

Corresponding to each individual peer discovery resource associated with an identifier in a discovery resource block, there is a set of basic transmission units. In this example, each segment includes eight OFDM tone-symbols, where a tone-symbol is the transmission unit of one tone for the duration of one symbol transmission time period. For example, peer discovery ID M resource 518 of discovery resource block 506 includes OFDM tone-symbol 0 526, OFDM tone-symbol 1 528, OFDM tone-symbol 2 530, OFDM tone-symbol 3 532, OFDM tone-symbol 4 534, OFDM tone-symbol 5 536, OFDM tone-symbol 6 538, OFDM tone symbol 7 540. In some such embodiments, one of the tone-symbols of the segment carries an intentional null. In another example, a peer discovery resource associated with an identifier in a peer discovery resource block includes a larger number of basic transmission units, e.g., 40 OFDM tone-symbols. In some embodiments, the number of intention nulls in the segment can be larger than 1, e.g., 5 intentional nulls for a segment of 40 OFDM tone-symbols. In addition, in some embodiments, the nulling can be done on the resource block level instead of the segment level. For example, a peer discovery symbol is nulled out (not transmitted) occasionally at random in a discovery resource block. In some embodiments, the nulling can be done on the resource ID block level instead of the symbol level. For example, the peer discovery signal, comprising a set of symbols, is nulled out (not transmitted) occasionally at random in a discovery resource block.

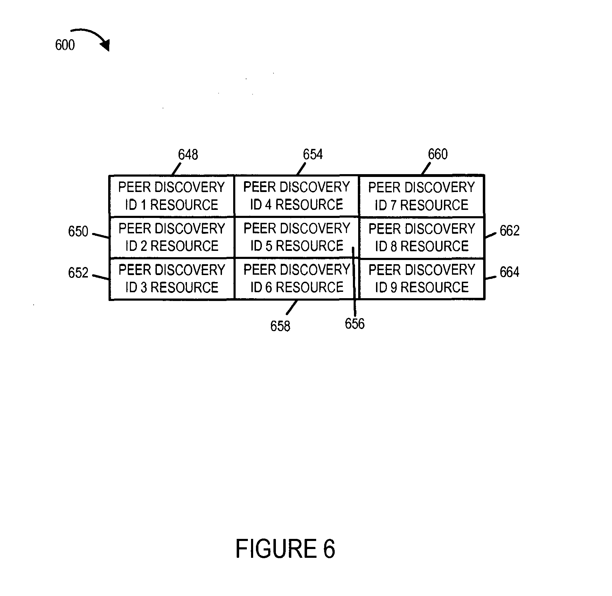

Figure 6 is a drawing of an exemplary discovery resource block 600 where there are nine individual peer discovery resource segments in the block 600 associated with different peer discovery resource identifiers. Figure 6 is presented with nine individual peer discovery resources for the purposes of explanation; however, in many implementations, a discovery resource block includes a larger number of individual resources, e.g., 100 or more individual peer discovery resources associated with different identifiers. Exemplary discovery resource block 600 includes: peer discovery ID 1 resource 648, peer discovery ID 2 resource 650, peer discovery ID 3 resource 652, peer discovery ID 4 resource 654, peer discovery ID 5 resource 656, peer discovery ID 6 resource 658, peer discovery ID 7 resource 660, peer discovery ID 8 resource 662, peer discovery ID 9 resource 664.

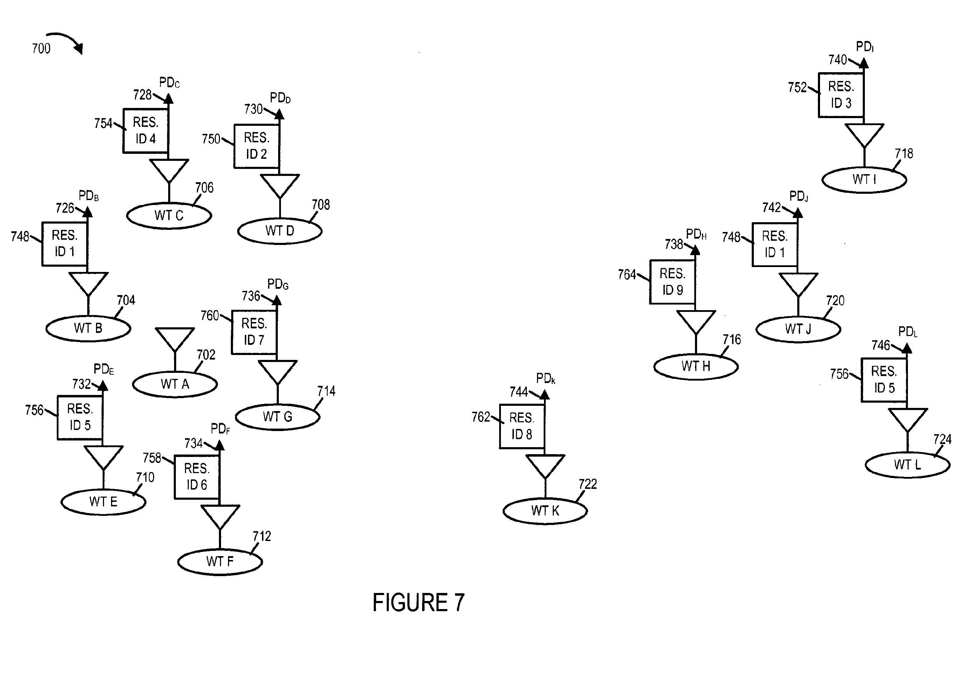

Figure 7-13 illustrate a sequence of an exemplary wireless peer to peer communications system which is used to illustrate various features and aspects in accordance with some embodiments. For example, WT A 702 may implement a method in accordance with flowchart 200 of Figure 2 and/or be implemented in accordance with device 300 of Figure 3 and/or assembly of modules 400 of Figure 4.

Figure 7 is a drawing 700 illustrating an exemplary peer to peer wireless communications system including a plurality of wireless communications devices (WT A 702, WT B 704, WT C 706, WT D 708, WT E 710, WT F 712, WT G 714, WT H 716, WT I 718, WT J 720, WT K 722, WT L 724) implementing a peer to peer timing structure and supporting peer to peer signaling. The timing structure may include discovery resource blocks in accordance with the format of exemplary discovery resource block 600 of Figure 6.

In the example of Figure 7 consider that WT A 702 has not yet acquired a resource identifier associated with peer discovery resources in the peer to peer timing structure. Further consider that wireless terminals (WT B 704, WT C 706, WT D 708, WT E 710, WT F 712, WT G 714, WT H 716, WT I 718, WT J 720, WT K 722, WT L 724) have acquired and are currently using resource identifiers associated with peer discovery resources. Wireless terminals (WT B 704, WT C 706, WT D 708, WT E 710, WT F 712, WT G 714, WT H 716, WT I 718, WT J 720, WT K 722, WT L 724) transmit peer discovery signals (PD_{B} signal 726, PD_{C} signal 728, PD_{D} signal 730, PD_{E} signal 732, PD_{F} signal 734, PD_{G} signal 736, PD_{H} signal 738, PD_{I} signal 740, PD_{J} signal 742, PD_{K} signal 744, PD_{L} signal 746) using air link resources (peer discovery ID 1 resource 748, peer discovery ID 4 resource 754, peer discovery ID 2 resource 750, peer discovery ID 5 resource 756, peer discovery ID 6 resource 758, peer discovery ID 7 resource 760, peer discovery ID 9 resource 764, peer discovery ID 3 resource 752, peer discovery ID 1 resource 748, peer discovery ID 8 resource 762, peer discovery ID 5 resource 756), respectively. Wireless terminal A 702 monitors the set of communications resources corresponding to different identifiers (748, 750, 752, 754, 756, 758, 760, 762, 764), and determines received power information associated with each resource associated with an identifier. For example, wireless terminal A 702 determines a total received power level and a strongest received signal power level corresponding to each identifier. On some resources multiple wireless terminals are transmitting peer discovery signals on the same peer discovery air link resource. The characteristics of the transmitted peer discovery signals, e.g., inclusion of a pseudo-randomly placed null, are such as to facilitate a receiver to be able to measure received power corresponding to each transmitted signal separately and identify a stronger received signal. For example, peer discovery ID 1 resource 748 carries peer discovery signal PD_{B} 726 from WT B 704 and PD_{J} signal 742 from WT J 720, and the stronger received signal comes from WT B 704 which happens to be closer to WT A 702.

WT A 702 orders the peer discovery air resources based on the determined received power level information. In some embodiments, WT A 702 determines a first power level ordering of identifiers corresponding to total power level information and a second power level ordering of identifiers corresponding to strongest received signal power level information.

WT A 702 selects an identifier with associated with peer discovery communications resources based on the determined received power level information, e.g., as a function of the ordering information. In this example, consider that the signal received on peer discovery resource ID 3 752, e.g., received PD_{I} signal 740 is determined to have the lowest total received power and the lowest strongest signal received power level. Device A 702 selects to acquire ID 3 and use the peer discovery air link resources associated with ID 3. In some embodiments, WT A 702 selects, e.g., selects randomly, from among a set of alternatives corresponding to determined received power level information below a threshold criteria. Thus, in such an embodiment, WT A 702 may not necessarily select the ID corresponding to the lowest received power level.

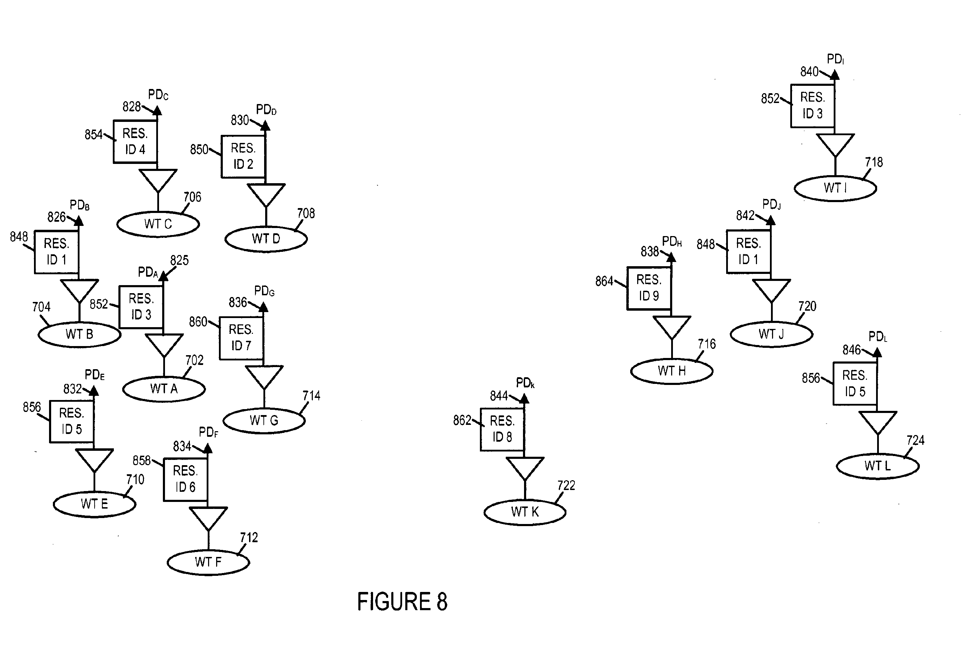

In Figure 8, WT A 702 uses the peer discovery air link resource associated with its acquired identifier, ID 3, to broadcast its peer discovery signal PD_{A} 825. Wireless terminals (WT A 702, WT B 704, WT C 706, WT D 708, WT E 710, WT F 712, WT G 714, WT H 716, WT I 718, WT J 720, WT K 722, WT L 724) transmit peer discovery signals (PD_{A} signal 825, PD_{B} signal 826, PD_{C} signal 828, PD_{D} signal 830, PD_{E} signal 832, PD_{F} signal 834, PD_{G} signal 836, PD_{H} signal 838, PD_{I} signal 840, PD_{J} signal 842, PD_{K} signal 844, PD_{L} signal 846) using air link resources (peer discovery ID 3 resource 852, peer discovery ID 1 resource 848, peer discovery ID 4 resource 854, peer discovery ID 2 resource 850, peer discovery ID 5 resource 856, peer discovery ID 6 resource 858, peer discovery ID 7 resource 860, peer discovery ID 9 resource 864, peer discovery ID 3 resource 852, peer discovery ID 1 resource 848, peer discovery ID 8 resource 862, peer discovery ID 5 resource 856), respectively.

When not transmitting a non-null peer discovery signal portion, WT A 702 monitors to receives signals being communicated on the peer discovery resources from other devices. In this way, WT A 702 can measure and characterize interference from other devices which may be concurrently using resources associated with ID 3. For example, WT A 702 uses seven of eight OFDM tone-symbols of peer discovery ID 3 air link resource 852 to transmit its peer discovery signal PD_{A} 825, and WT A 702 receives on the eighth OFDM tone-symbol of peer discovery ID 3 air link resource 852, which is the OFDM tone-symbol of the set associated with its transmitter NULL, to detect a peer discovery signal portion from another device, e.g., a portion signal PD_{I} 840, and/or an intentional interference signal.

In some embodiments, an intentional interference signal may be transmitted, e.g., by a third device, with the intent to cause WT A 702 to vacate the resources associated with ID 3. This intentional interference signal may be referred to as a jamming signal. The jamming signal is useful in a hidden node situation, where two devices, which are transmitting on the same resource and which have a poor quality channel between one another, are unaware that their concurrent transmissions are causing unacceptable interference to the third node which happens to have good channel conditions to both transmitting devices.

WT A 702 also measures received power level information corresponding to resources associated with identifiers other than its currently held identifier. WT A 702 determines total receive power level information associated with each identifier, and where possible, determined strongest received signal power level information. WT A 702 orders the identifiers and associated resources based on the determined receive power level information.

WT A 702 determines a switching threshold as a function of the determined power level information associated with one or more resources. In some embodiments, WT A 702 determines the switching threshold as function of determined power level information associated with one or more resources associated with identifiers that it is not using and determined interference information associated with its own currently held identifier. WT A 702 decides whether or not to switch from the resources associated with ID 3 to resources associated with another ID based on the received signal received during its transmission null on peer discovery ID 3 resource 852, and the determined switching threshold. In this example, at this point in time, WT A 702 decides not switch from ID 3, so WT A 702 will continue to broadcast its peer discovery signal on the peer discovery resource associated with ID 3.

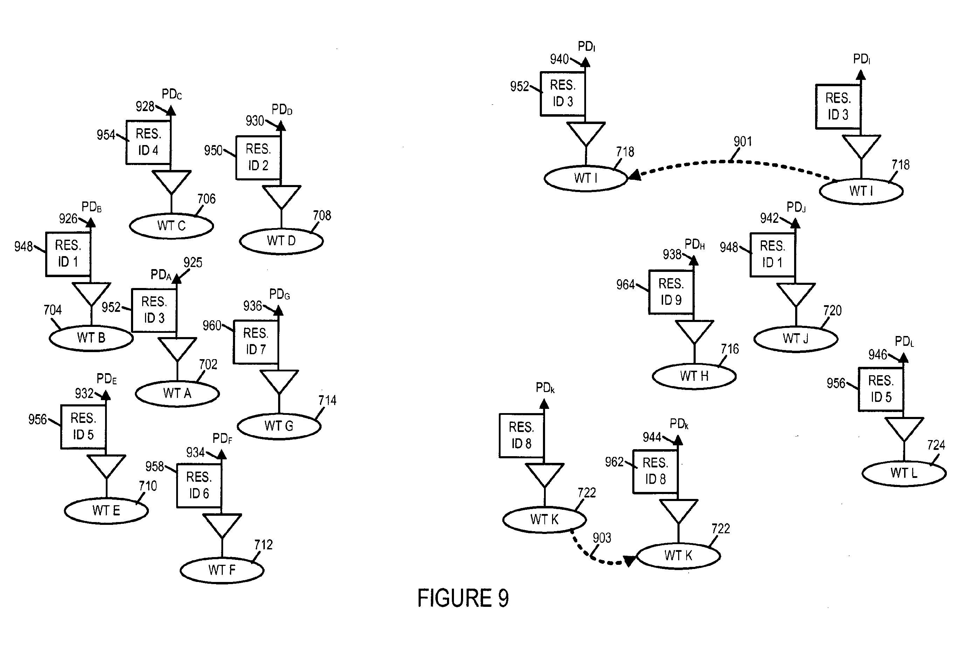

In Figure 9, one may observe that WT I 718 has changed its position as indicated by dashed line arrow 901 and WT K 722 has changed its position as indicated by dashed arrow 903. Wireless terminals (WT A 702, WT B 704, WT C 706, WT D 708, WT E 710, WT F 712, WT G 714, WT H 716, WT I 718, WT J 720, WT K 722, WT L 724) transmit peer discovery signals (PD_{A} signal 925, PD_{B} signal 926, PD_{C} signal 928, PD_{D} signal 930, PD_{E} signal 932, PD_{F} signal 934, PD_{G} signal 936, PD_{H} signal 938, PD_{I} signal 940, PD_{J} signal 942, PD_{K} signal 944, PD_{L} signal 946) using air link resources (peer discovery ID 3 resource 952, peer discovery ID 1 resource 948, peer discovery ID 4 resource 954, peer discovery ID 2 resource 950, peer discovery ID 5 resource 956, peer discovery ID 6 resource 958, peer discovery ID 7 resource 960, peer discovery ID 9 resource 964, peer discovery ID 3 resource 952, peer discovery ID 1 resource 948, peer discovery ID 8 resource 962, peer discovery ID 5 resource 956), respectively.

WT A 702, when not transmitting, monitors in a similar manner as described with respect to Figure 8. WT A 702 determines received power level information and interference information, calculates a new switching threshold, and makes another decision as to whether or not to switch to a new identifier. In this example, at this point in time, WT A 702 decides not to switch from ID 3, so WT A 702 will continue to broadcast its peer discovery signal on the peer discovery resource associated with ID 3.

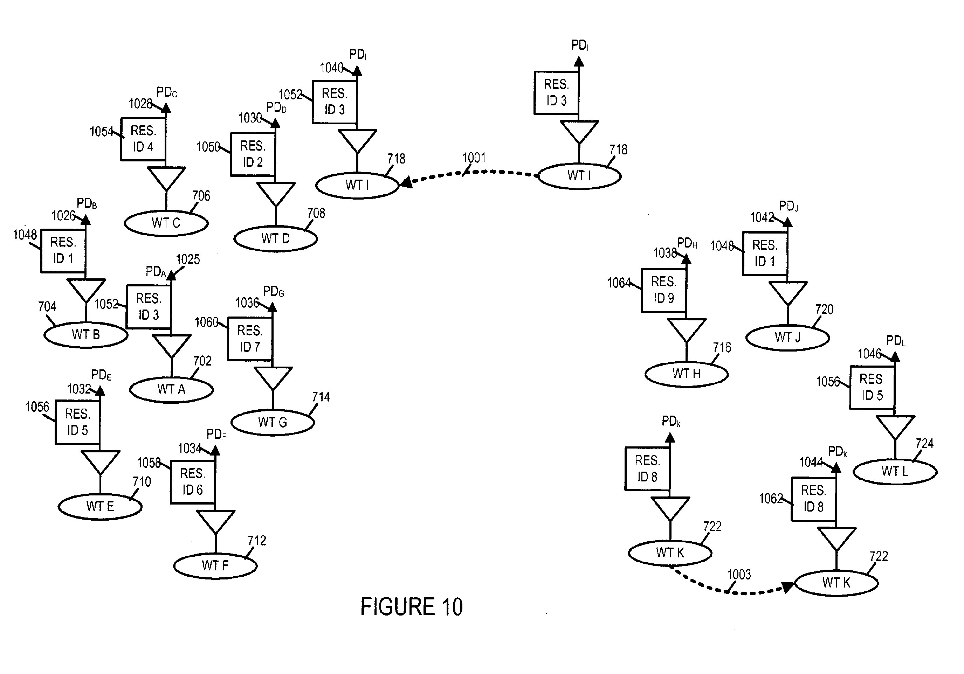

In Figure 10, one may observe that WT 1718 has again changed its position as indicated by dashed line arrow 1001 and WT K 722has again changed its position as indicated by dashed arrow 1003. Wireless terminals (WT A 702, WT B 704, WT C 706, WT D 708, WT E 710, WT F 712, WT G 714, WT H 716, WT I 718, WT J 720, WT K 722, WT L 724) transmit peer discovery signals (PD_{A} signal 1025, PD_{B} signal 1026, PD_{C} signal 1028, PD_{D} signal 1030, PD_{E} signal 1032, PD_{F} signal 1034, PD_{G} signal 1036, PD_{H} signal 1038, PD_{I} signal 1040, PD_{J} signal 1042, PD_{K} signal 1044, PD_{L} signal 1046) using air link resources (peer discovery ID 3 resource 1052, peer discovery ID 1 resource 1048, peer discovery ID 4 resource 1054, peer discovery ID 2 resource 1050, peer discovery ID 5 resource 1056, peer discovery ID 6 resource 1058, peer discovery ID 7 resource 1060, peer discovery ID 9 resource 1064, peer discovery ID 3 resource 1052, peer discovery ID 1 resource 1048, peer discovery ID 8 resource 1062, peer discovery ID 5 resource 1056), respectively.

WT A 702, when not transmitting, monitors in a similar manner as described with respect to Figure 8. WT A 702 determines received power level information and interference information, calculates a new switching threshold, and makes another decision as to whether or not to switch to a new identifier. In this example, at this point in time, WT A 702 decides to switch from ID 3 to a new identifier. WT A 702 selects ID 8 based on the determined received power level information. At this point in time the received peer discovery signal from WT K 722 communicated on peer discovery ID 8 resource 1062 corresponds to the lowest total receive power level and the lowest strongest signal received power level. WT A 702 generates a resource change signal to communicate that it is changing from using the peer discovery resources associated with ID 3 to the peer discovery resources associated with ID 8.

In some embodiments, WT A 702 selects, e.g., selects randomly, from among a set of alternatives corresponding to determined received power level information below a threshold criteria. Thus, in such an embodiment, WT A 702 may not necessarily select the ID corresponding to the lowest received power level.

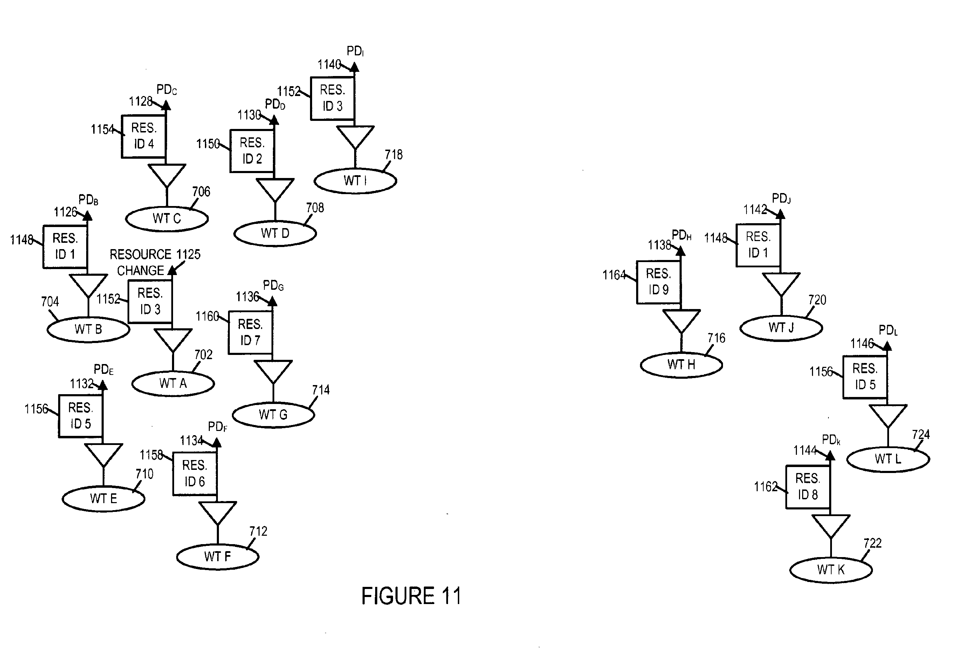

Figure 11 illustrates that WT A 702 broadcasts a resource change signal 1125 indicating the change from using communications resources associated with ID 3 to communications resources associated with ID 8 on peer discovery ID 3 air link resource 1152. This is the last transmission by WT A 702 on a resource associated with ID 3 before switching to resources associated with the new identifier ID 8. Wireless terminals (WT B 704, WT C 706, WT D 708, WT E 710, WT F 712, WT G 714, WT H 716, WT I 718, WT J 720, WT K 722, WT L 724) transmit peer discovery signals (PD_{B} signal 1126, PD_{C} signal 1128, PD_{D} signal 1130, PD_{F} signal 1132, PD_{F} signal 1134, PD_{G} signal 1136, PD_{H} signal 1138, PD_{I} signal 1140, PD_{J} signal 1142, PD_{K} signal 1144, PD_{L} signal 1146) using air link resources (peer discovery ID 1 resource 1148, peer discovery ID 4 resource 1154, peer discovery ID 2 resource 1150, peer discovery ID 5 resource 1156, peer discovery ID 6 resource 1158, peer discovery ID 7 resource 1160, peer discovery ID 9 resource 1164, peer discovery ID 3 resource 1152, peer discovery ID 1 resource 1148, peer discovery ID 8 resource 1162, peer discovery ID 5 resource 1156), respectively.

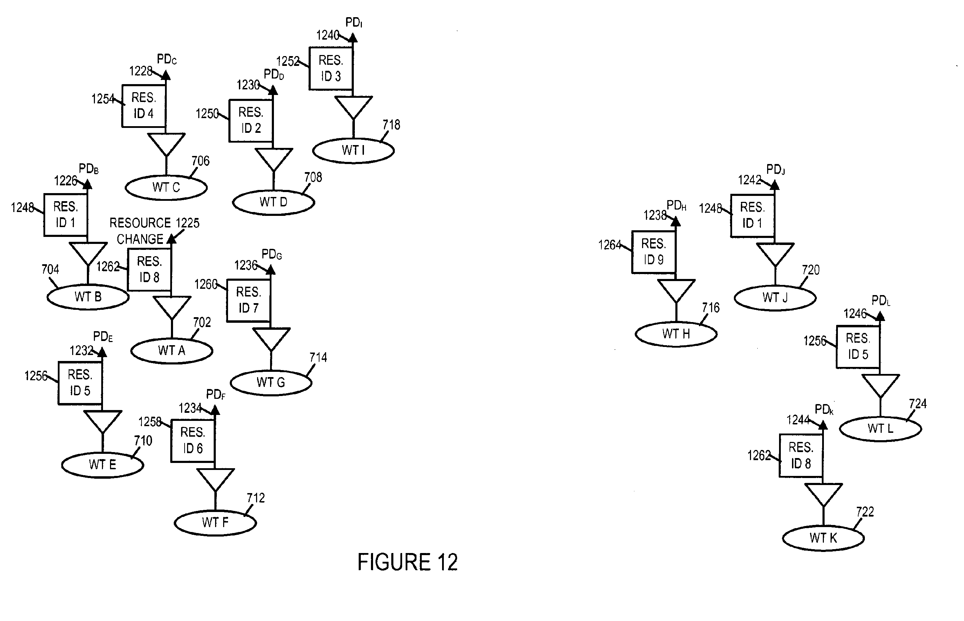

Figure 12 illustrates that WT A 702 broadcasts a resource change signal 1225 indicating the change from using communications resources associated with ID 3 to communications resources associated with ID 8 on peer discovery ID 8 air link resource 1262. This is the first transmission by WT A 702 on a resource associated with ID 8 since switching to resources associated with the new identifier ID 8. Wireless terminals (WT B 704, WT C 706, WT D 708, WT E 710, WT F 712, WT G 714, WT H 716, WT I 718, WT J 720, WT K 722, WT L 724) transmit peer discovery signals (PD_{B} signal 1226, PD_{C} signal 1228, PD_{D} signal 1230, PD_{F} signal 1232, PD_{F} signal 1234, PD_{G} signal 1236, PD_{H} signal 1238, PD_{I} signal 1240, PD_{J} signal 1242, PD_{K} signal 1244, PD_{L} signal 1246) using air link resources (peer discovery ID 1 resource 1248, peer discovery ID 4 resource 1254, peer discovery ID 2 resource 1250, peer discovery ID 5 resource 1256, peer discovery ID 6 resource 1258, peer discovery ID 7 resource 1260, peer discovery ID 9 resource 1264, peer discovery ID 3 resource 1252, peer discovery ID 1 resource 1248, peer discovery ID 8 resource 1262, peer discovery ID 5 resource 1256), respectively.

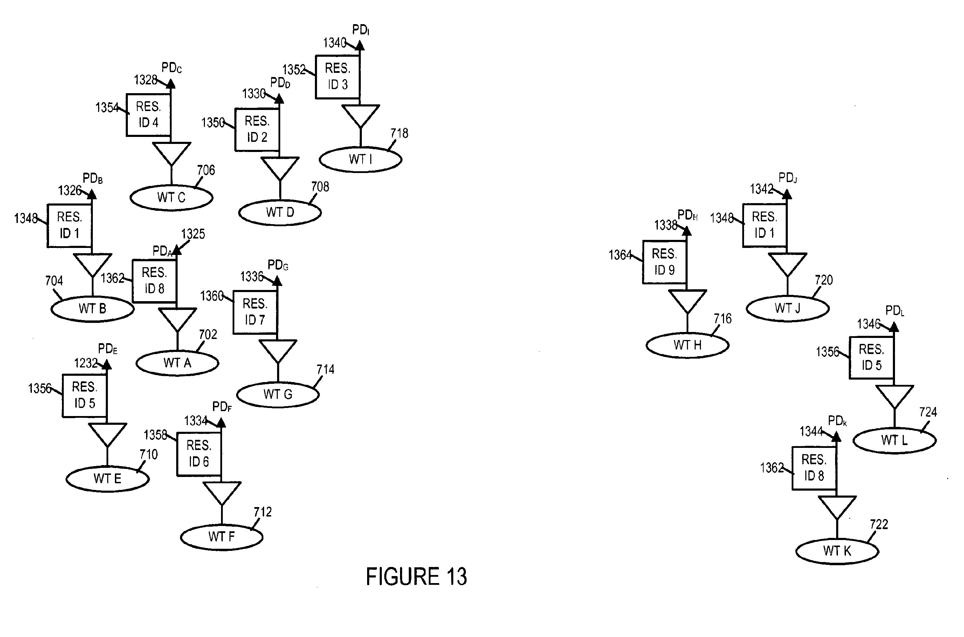

Figure 13 illustrates that WT A 702 subsequently broadcasts a peer discovery signal PD_{A} 1325 on peer discovery ID 8 air link resource 1362. Wireless terminals (WT A 702, WT B 704, WT C 706, WT D 708, WT E 710, WT F 712, WT G 714, WT H 716, WT I 718, WT J 720, WT K 722, WT L 724) transmit peer discovery signals (PD_{A} 1325, PD_{B} signal 1326, PD_{C} signal 1328, PD_{D} signal 1330, PD_{E} signal 1332, PD_{F} signal 1334, PD_{G} signal 1336, PD_{H} signal 1338, PD_{I} signal 1340, PD_{J} signal 1342, PD_{K} signal 1344, PD_{L} signal 1346) using air link resources (peer discovery ID 8 resource 1362, peer discovery ID 1 resource 1348, peer discovery ID 4 resource 1354, peer discovery ID 2 resource 1350, peer discovery ID 5 resource 1356, peer discovery ID 6 resource 1358, peer discovery ID 7 resource 1360, peer discovery ID 9 resource 1364, peer discovery ID 3 resource 1352, peer discovery ID 1 resource 1348, peer discovery ID 8 resource 1362, peer discovery ID 5 resource 1356), respectively.

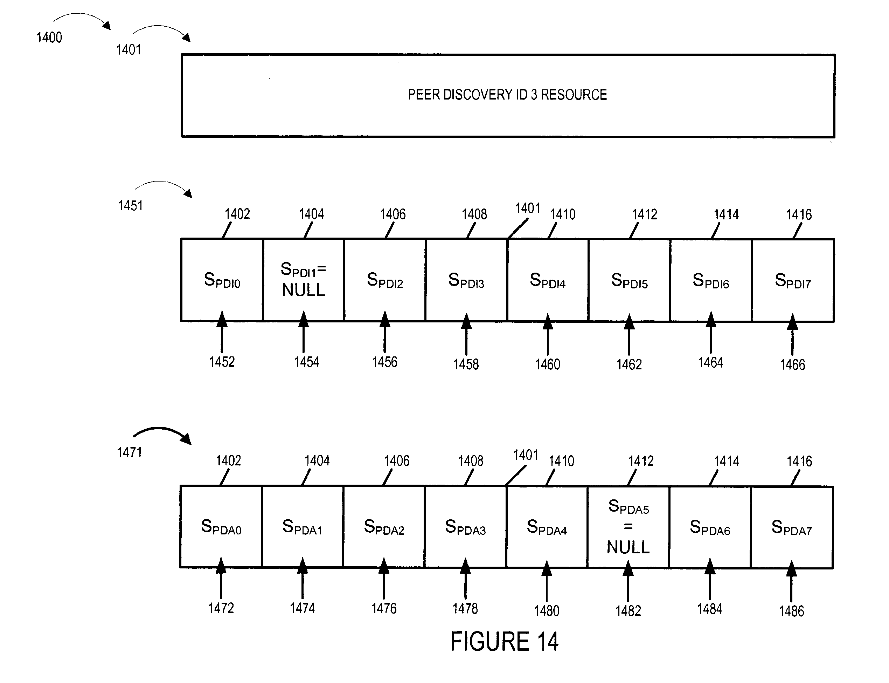

Figure 14 is a drawing 1400 illustrating exemplary peer discovery signals being transmitted on the same peer discovery resource from two devices. The exemplary peer discovery resource is peer discovery ID 3 resource 1401. Drawing 1451 illustrates that peer discovery ID 3 resource 1401 includes eight OFDM tone symbols (1402, 1404, 1406, 1408, 1410, 1412, 1414, 1416) and is carrying a peer discovery signal from device I 718. Device I 718 is transmitting a peer discovery signal using peer discovery ID 3 resource 1401. The peer discovery signal transmitted from device I 718 includes modulation symbols (S_{PDIO} 1452, S_{PDI1} = Null 1454, S_{PDI2} 1456, S_{PDI3} 1458, S_{PDI4} 1460, S_{PDI5} 1462, S_{PDI6} 1464, S_{PDI7} 1466) on tone-symbols (1402, 1404, 1406, 1408, 1410, 1412, 1414, 1416), respectively. Drawing 1471 illustrates that peer discovery ID 3 resource 1401 which includes the eight OFDM tone symbols (1402, 1404, 1406, 1408, 1410, 1412, 1414, 1416) is also carrying a peer discovery signal from device A 702. Device A 702 is transmitting a peer discovery signal using peer discovery ID 3 resource 1401. The peer discovery signal transmitted from device A 702 includes modulation symbols (S_{PDAO} 1472, S_{PDA1} 1474, S_{PDA2} 1476, S_{PDA3} 1478, S_{PDA4} 1480, S_{PDA5} =NULL 1482, S_{PDA6} 1484, S_{PDA7} 1486) on tone-symbols (1402, 1404, 1406, 1408, 1410, 1412, 1414, 1416), respectively.

In accordance with a feature of some embodiments, the transmitted peer discovery signal includes an intentional NULL on at least one OFDM tone-symbol of the peer discovery resource 1401. In some embodiments, the decision, for the transmitting device, as to which resource to place the NULL is based on a pseudorandom selection implementation. Thus, it is likely that two devices which are using shared peer discovery resource 1401 will be placing a NULL on different OFDM tone-symbols of the resource.

With regard to device I 718, during its intentional NULL, e.g., the time of OFDM tone-symbol 1404, device I 718 can receive and monitor signals being transmitted from other devices, e.g., other peer discovery signals and intentional interference signals. With regard to device A 702, during its intentional NULL, e.g., the time of OFDM tone-symbol 1412, device A 702 can receive and monitor signals being transmitted from other devices, e.g., other peer discovery signals and intentional interference signals.

Peer discovery ID 3 resource 1401 is, e.g., peer discovery ID 3 resource 852 of Figure 8; the peer discovery signal represented by the composite of signal portions (1452, 1454, 1456, 1458, 1460, 1462, 1464, 1466) is, e.g., peer discovery PD_{I} 840 signal of Figure 8; and the peer discovery signal represented by the composite of signal portions (1472, 1474, 1476, 1478, 1480, 1482, 1484, 1486) is, e.g., peer discovery PD_{A} 825 signal of Figure 8. Alternatively, peer discovery ID 3 resource 1401 is, e.g., peer discovery ID 3 resource 952 of Figure 9; the peer discovery signal represented by the composite of signal portions (1452, 1454, 1456, 1458, 1460, 1462, 1464, 1466) is, e.g., peer discovery PD_{I} 940 signal of Figure 9; and the peer discovery signal represented by the composite of signal portions (1472, 1474, 1476, 1478, 1480, 1482, 1484, 1486) is, e.g., peer discovery PD_{A} 925 signal of Figure 9. Alternatively, peer discovery ID 3 resource 1401 is, e.g., peer discovery ID 3 resource 1052 of Figure 10; the peer discovery signal represented by the composite of signal portions (1452, 1454, 1456, 1458, 1460, 1462, 1464, 1466) is, e.g., peer discovery PD_{I} 1040 signal of Figure 10; and the peer discovery signal represented by the composite of signal portions (1472, 1474, 1476, 1478, 1480, 1482, 1484, 1486) is, e.g., peer discovery PD_{A} 1025 signal of Figure 10.

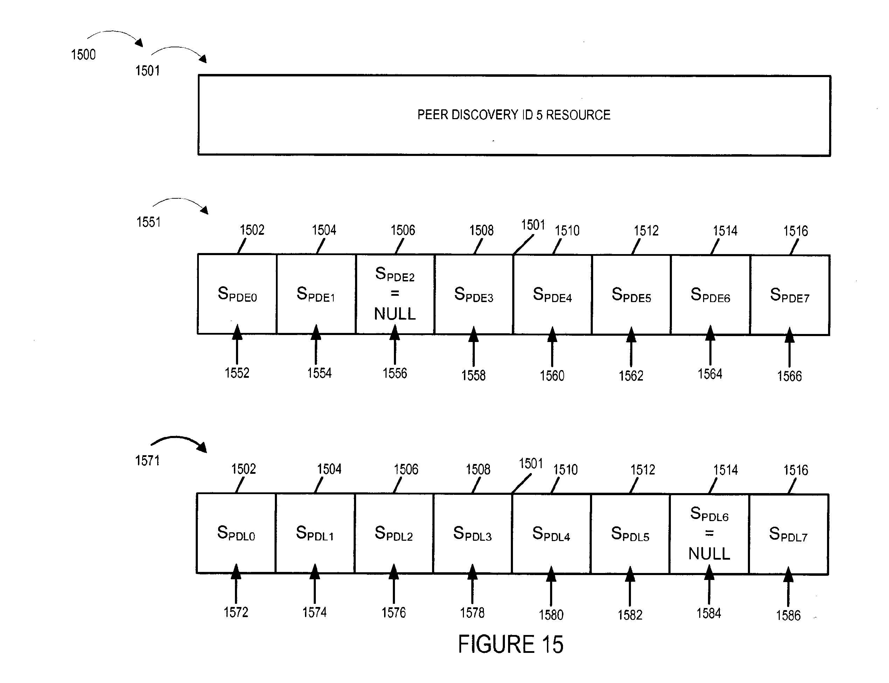

Figure 15 is a drawing 1500 illustrating exemplary peer discovery signals being transmitted on the same peer discovery resource from two devices. The exemplary peer discovery resource is peer discovery ID 5 resource 1501. Drawing 1551 illustrates that peer discovery ID 5 resource 1501 includes eight OFDM tone symbols (1502, 1504, 1506, 1508, 1510, 1512, 1514, 1516) and is carrying a peer discovery signal from device E 710. Device E 710 is transmitting a peer discovery signal using peer discovery ID 5 resource 1501. The peer discovery signal transmitted from device E 710 includes modulation symbols (S_{PDEO} 1552, S_{PDE1} 1554, S_{PDE2} = Null 1556, S_{PDE3} 1558, S_{PDE4} 1560, S_{PDE5} 1562, S_{PDE6} 1564, S_{PDE7} 1566) on tone-symbols (1502, 1504, 1506, 1508, 1510, 1512, 1514, 1516), respectively. Drawing 1571 illustrates that peer discovery ID 5 resource 1501 which includes the eight OFDM tone symbols (1502, 1504, 1506, 1508, 1510, 1512, 1514, 1516) is also carrying a peer discovery signal from device L 724. Device L 724 is transmitting a peer discovery signal using peer discovery ID 5 resource 1501. The peer discovery signal transmitted from device L 724 includes modulation symbols (S_{PDLO} 1572, S_{PDL1} 1574, S_{PDL2} 1576, S_{PDL3} 1578, S_{PDL4} 1580, S_{PDL5} 1582, S_{PDL6} = NULL 1584, S_{PDL7} 1586) on tone-symbols (1502, 1504, 1506, 1508, 1510, 1512, 1514, 1516), respectively.

In accordance with a feature of some embodiments, a transmitted peer discovery signal includes an intentional NULL on at least one OFDM tone-symbol of the peer discovery resource 1501. In some embodiments, the decision, for the transmitting device, as to which resource to place the NULL is based on a pseudorandom selection implementation. Thus, it is likely that two devices which are using shared peer discovery resource 1501 will be placing a NULL on different OFDM tone-symbols of the resource.

With regard to wireless terminal A 702 which is monitoring peer discovery ID resource 5 1501, the placement of the intentional nulls on different OFDM tone-symbols for the two different transmitted signals, allows WT A 702 to separate received signals and determine a received signal power level corresponding to the stronger received signal. Peer discovery ID 5 resource 1501 is, e.g., peer discovery ID 5 resource 756 of Figure 7; the peer discovery signal represented by the composite of signal portions (1552, 1554, 1556, 1558, 1560, 1562, 1564, 1566) is, e.g., peer discovery PD_{E} 732 signal of Figure 7; and the peer discovery signal represented by the composite of signal portions (1572, 1574, 1576, 1578, 1580, 1582, 1584, 1586) is, e.g., peer discovery PD_{L} 746 signal of Figure 7. In some embodiments, the nulling can be done on the resource block level instead of the segment level. For example, a peer discovery symbol is nulled out (not transmitted) occasionally at random in a discovery resource block. In some embodiments, the nulling can be done on the resource ID block level instead of the symbol level. For example, the peer discovery signal, comprising a set of symbols, is nulled out (not transmitted) occasionally at random in a discovery resource block.

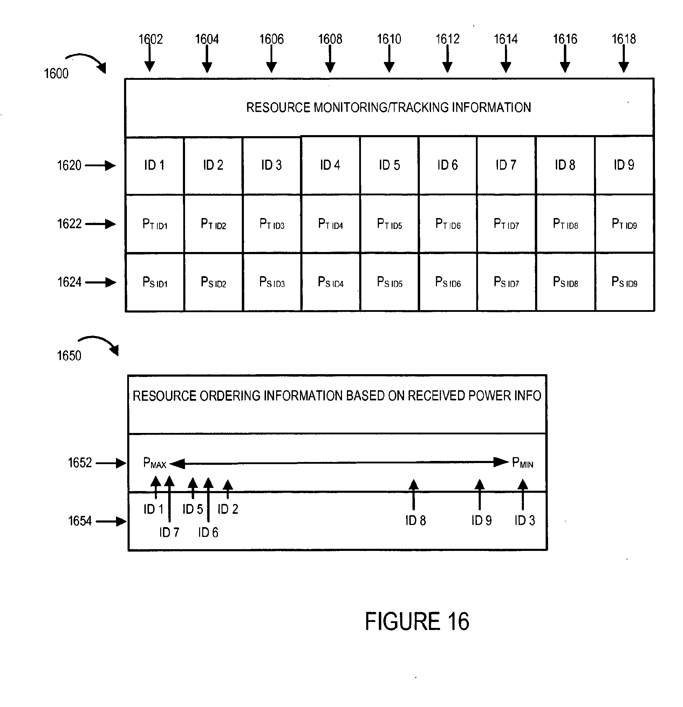

Figure 16 is a drawing illustrating exemplary resource information which is determined based on received power measurements, stored, and used for resource selection and/or resource switching determinations in accordance with some embodiments. Table 1600 is a table of power information corresponding to the different peer discovery ID resources which are being tracked. Row 1620 lists the different peer discovery identifiers (ID 1, ID 2, ... , ID 9). Each column (1602, 1604, 1606, 1608, 1610, 1612, 1614, 1616, 1618) corresponds to a different peer discovery identifier (ID 1, ID 2, ID3, ID 4, ID 5, ID 6, ID 7, ID 8, ID 9), respectively. Row 1622 lists total received power level information corresponding to each identifier (P_{T 1D1}, P_{T ID2}, ..., P_{TID9}). Row 1624 lists strongest received signal power level information corresponding to each identifier (P_{S 1D1}, P_{S ID2}, ..., P_{T ID9}). Consider that power level information in the table corresponds to WT A's monitoring in the situation of Figure 7. In such a situation, P_{SID1} corresponds to the received power level at WT A 702 of signal PD_{B} 726, and P_{SID5} corresponds to the received power level at WT A 702 of signal PD_{E} 732.

Table 1650 identifies determined resource ordering information based on received power information. Table 1650 may be based on received total power level information, strongest received signal power information, or some function of both inputs. In some embodiments, the wireless terminal performs a first ordering based on total received power information and a second ordering based on strongest received signal power information. Row 1652 presents the maximum power level at the left and the minimum power level at the right. Row 1654 identifies where each identifier associated with a peer discovery resource fits into the ordering based on measurement information from table 1600. The exemplary ordering of row 1654 may represent the conditions observed by WT A 702 corresponding to its monitoring of Figure 7.

Following selection of a resource to be used for its peer discovery transmitter signaling, e.g., the selection of the resources corresponding to ID 3, WT A 702 continues to monitor, track, and order the resources based on the received power level measurements. In addition WT A 702 tracks the observed interference level on its selected resource, e.g., the interference level on ID 3 peer discovery resources, based upon power measurements obtained during the intentional transmitter null of its peer discovery signal. Switching thresholds used in deciding whether to switch from a currently held identifier to a new identifier, in some embodiments, are varied as a function of the determined power information, e.g., as a function of the ordering information based on power measurements. One purpose of ordering is to determine which peer discovery resources would be acceptable ones for transmission. In some embodiments, the ordering of resources may be approximate. Approximate ordering of resources may save on computation. In some embodiments, the ordering of resources is achieved approximately by a form of classification of the observed powers.

The techniques of various embodiments may be implemented using software, hardware and/or a combination of software and hardware. In some embodiments, modules are implemented as physical modules. In some such embodiments, the individual physical modules are implemented in hardware, e.g., as circuits, or include hardware, e.g., circuits, with some software. In other embodiments, the modules are implemented as software modules which are stored in memory and executed by a processor, e.g., general purpose computer. Various embodiments are directed to apparatus, e.g., stationary wireless nodes, mobile nodes such as mobile access terminals of which cell phones are but one example, access point such as base stations including one or more attachment points, servers, and/or communications systems. Various embodiments are also directed to methods, e.g., method of controlling and/or operating wireless communications devices including mobile and/or stationary nodes, access points such as base stations, server nodes and/or communications systems, e.g., hosts. Various embodiments are also directed to machine, e.g., computer, readable medium, e.g., ROM, RAM, CDs, hard discs, etc., which include machine readable instructions for controlling a machine to implement one or more steps of a method.

It is understood that the specific order or hierarchy of steps in the processes disclosed is an example of exemplary approaches. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

In various embodiments nodes described herein are implemented using one or more modules to perform the steps corresponding to one or more methods, for example, deciding to switch from a first communications resource corresponding to a first identifier to a second communications resource corresponding to a second identifier; and broadcasting a resource change signal indicating a change from using the first communications resource to the second communications resource.

Thus, in some embodiments various features are implemented using modules. Such modules may be implemented using software, hardware or a combination of software and hardware. Many of the above described methods or method steps can be implemented using machine executable instructions, such as software, included in a machine readable medium such as a memory device, e.g., RAM, floppy disk, etc. to control a machine, e.g., general purpose computer with or without additional hardware, to implement all or portions of the above described methods, e.g., in one or more nodes. Accordingly, among other things, various embodiments are directed to a machine-readable medium including machine executable instructions for causing a machine, e.g., processor and associated hardware, to perform one or more of the steps of the above-described method(s). Some embodiments are directed to a device, e.g., communications device, including a processor configured to implement one, multiple or all of the steps of one or more methods of the invention.

Some embodiments are directed to a computer program product comprising a computer-readable medium comprising code for causing a computer, or multiple computers, to implement various functions, steps, acts and/or operations, e.g. one or more steps described above. Depending on the embodiment, the computer program product can, and sometimes does, include different code for each step to be performed. Thus, the computer program product may, and sometimes does, include code for each individual step of a method, e.g., a method of controlling a communications device or node. The code may be in the form of machine, e.g., computer, executable instructions stored on a computer-readable medium such as a RAM (Random Access Memory), ROM (Read Only Memory) or other type of storage device. In addition to being directed to a computer program product, some embodiments are directed to a processor configured to implement one or more of the various functions, steps, acts and/or operations of one or more methods described above. Accordingly, some embodiments are directed to a processor, e.g., CPU, configured to implement some or all of the steps of the methods described herein. The processor may be for use in, e.g., a communications device or other device described in the present application.

In some embodiments, the processor or processors, e.g., CPUs, of one or more devices, e.g., communications devices such as wireless terminals are configured to perform the steps of the methods described as being performed by the communications device. Accordingly, some but not all embodiments are directed to a device, e.g., communications device, with a processor which includes a module corresponding to each of the steps of the various described methods performed by the device in which the processor is included. In some but not all embodiments a device, e.g., communications device, includes a module corresponding to each of the steps of the various described methods performed by the device in which the processor is included. The modules may be implemented using software and/or hardware.

While various features are described in the context of an OFDM system, at least some of the methods and apparatus of various embodiments are applicable to a wide range of communications systems including many non-OFDM and/or non-cellular systems.

Numerous additional variations on the methods and apparatus of the various embodiments described above will be apparent to those skilled in the art in view of the above description. Such variations are to be considered within the scope. The methods and apparatus may be, and in various embodiments are, used with CDMA, orthogonal frequency division multiplexing (OFDM), GSM and/or various other types of communications techniques which may be used to provide wireless communications links, e.g., WAN wireless communications links, between access points and wireless communications device such as mobile nodes and wireless communications. The methods and apparatus may be, and in various embodiments are, used with CDMA, orthogonal frequency division multiplexing (OFDM), GSM and/or various other types of communications techniques which may be used to provide wireless communications links, e.g., direct peer to peer wireless communications links, between wireless communications devices including peer to peer interfaces. In some embodiments a wireless communications device including both a wide area network interface and a peer to peer network interface uses different communications techniques for the different interfaces, e.g., one of CDMA and GSM based techniques for the WAN interface and OFDM based techniques for the peer to peer interface. In some embodiments the access points are implemented as base stations which establish communications links with mobile nodes using CDMA, GSM and/or OFDM. In various embodiments the mobile nodes are implemented as notebook computers, personal data assistants (PDAs), or other portable devices including receiver/transmitter circuits and logic and/or routines, for implementing the methods.
**In the following, further examples are described to facilitate the understanding of the invention:**
1. A method of operating a communications device, the method comprising:
   deciding to switch from a first communications resource corresponding to a first identifier to a second communications resource corresponding to a second identifier; and
   broadcasting a resource change signal indicating a change from using the first communications resource to the second communications resource.
2. The method of example 1, wherein broadcasting the resource change signal includes transmitting the broadcast resource change signal on the first communications resource.
3. The method of example 2, wherein said resource change signal is the last signal transmitted on said first communications resource by said communications device.
4. The method of example 1, wherein broadcasting the resource change signal includes transmitting the broadcast resource change signal on the second communications resource.
5. The method of example 4, wherein said resource change signal is the first signal transmitted on said second communications resource by said communications device.
6. The method of example 1, wherein broadcasting the resource change signal includes transmitting the broadcast resource change signal on both the first and second communications resources.
7. A communications device comprising:
   means for deciding to switch from a first communications resource corresponding to a first identifier to a second communications resource corresponding to a second identifier; and
   means for broadcasting a resource change signal indicating a change from using the first communications resource to the second communications resource.
8. The communications device of example 1, wherein said means for broadcasting the resource change signal includes means for transmitting the broadcast resource change signal on the first communications resource.
9. The communications device of example 8, wherein said resource change signal is the last signal transmitted on said first communications resource by said communications device.
10. The communications device of example 7, wherein said means for broadcasting the resource change signal includes means for transmitting the broadcast resource change signal on the second communications resource.
11. The communications device of example 10, wherein said resource change signal is the first signal transmitted on said second communications resource by said communications device.
12. The communications device of example 7, wherein said means for broadcasting the resource change signal includes means for transmitting the broadcast resource change signal on the first communications resource and means for transmitting the broadcast change signal on the second communications resource.
13. A computer program product for use in a communications device, the computer program product comprising:
   a computer readable medium comprising:
      code for causing at least one computer to decide to switch from a first communications resource corresponding to a first identifier to a second communications resource corresponding to a second identifier; and
      code for causing said at least one computer to broadcast a resource change signal indicating a change from using the first communications resource to the second communications resource.
14. The computer program product of example 13, wherein said code for causing said at least one computer to broadcast the resource change signal includes code for causing said at least one computer to transmit the broadcast resource change signal on the first communications resource.
15. A communications device comprising:
   at least one processor configured to:
      decide to switch from a first communications resource corresponding to a first identifier to a second communications resource corresponding to a second identifier; and
      broadcast a resource change signal indicating a change from using the first communications resource to the second communications resource;
   and memory coupled to said at least one processor.
16. The communications device of example 15, said at least one processor is configured to transmit the broadcast resource change signal on the first communications resource as part of being configured to broadcast the resource change signal.
17. The communications device of example 16, wherein said resource change signal is the last signal transmitted on said first communications resource by said communications device.
18. The communications device of example 15, wherein said at least one processor is configured to transmit the broadcast resource change signal on the second communications resource as part of being configured to broadcast the resource change signal.
19. The communications device of example 18, wherein said resource change signal is the first signal transmitted on said second communications resource by said communications device.
20. The communications device of example 15, wherein said at least one processor is configured to transmit on the first communications resource and transmit on the second communications resource as part of being configured to broadcast the resource change signal.

## Claims

1. A method of operating a communications device (300), the method comprising:
deciding to switch from a first communications resource corresponding to a first identifier to a second communications resource corresponding to a second identifier; and
broadcasting a resource change signal indicating a change from using the first communications resource to the second communications resource, **characterized in that** said broadcasting the resource change signal includes transmitting the broadcast resource change signal on the second communications resource.

2. The method of claim 1, wherein broadcasting the resource change signal includes transmitting the broadcast resource change signal on the first communications resource.

3. The method of claim 2, wherein said resource change signal is the last signal transmitted on said first communications resource by said communications device (300).

4. The method of claim 1, wherein said resource change signal is the first signal transmitted on said second communications resource by said communications device (300).

5. The method of claim 4, wherein broadcasting the resource change signal further includes transmitting the broadcast resource change signal on the first communications resource so that the broadcast resource change signal is transmitted on both the first and second communications resources.

6. A communications device (300) comprising:
means (428) for deciding to switch from a first communications resource corresponding to a first identifier to a second communications resource corresponding to a second identifier; and
means (438) for broadcasting a resource change signal indicating a change from using the first communications resource to the second communications resource, **characterized in that** said means (438) for broadcasting the resource change signal including means (442) for transmitting the broadcast resource change signal on the second communications resource.

7. The communications device (300) of claim 6, wherein said means (438) for broadcasting the resource change signal includes means (440) for transmitting the broadcast resource change signal on the first communications resource.

8. The communications device (300) of claim 7, wherein said resource change signal is the last signal transmitted on said first communications resource by said communications device (300).

9. The communications device (300) of claim 6, wherein said resource change signal is the first signal transmitted on said second communications resource by said communications device (300).

10. The communications device (300) of claim 9, wherein said means (438) for broadcasting the resource change signal further includes means (440) for transmitting the broadcast resource change signal on the first communications resource so that the broadcast resource change signal is transmitted on both the first communications resource and the second communications resource.

11. The communications device (300) of claim 6, comprising:
at least one processor (302) configured to implement said means (428) for deciding to switch from a first communications resource to a second communications resource and said means (438) for broadcasting a resource change signal to the second communications resource; and
and memory (304) coupled to said at least one processor (302).

12. The communications device (300) of claim 11, said at least one processor (302) is configured to transmit the broadcast resource change signal on the first communications resource as part of being configured to broadcast the resource change signal.

13. The communications device (300) of claim 12, wherein said resource change signal is the last signal transmitted on said first communications resource by said communications device (300).

14. The communications device (300) of claim 11, wherein said resource change signal is the first signal transmitted on said second communications resource by said communications device (300), in particular wherein said at least one processor (302) is further configured to transmit on the first communications resource so that the broadcast resource change signal is transmitted on both the first communications resource and the second communications resource as part of being configured to broadcast the resource change signal.

15. A computer readable medium (304) comprising code for performing the steps according to any of the claims 1 to 5 when executed on a computer.

## Patentansprüche

1. Verfahren zum Betreiben eines Kommunikationsgeräts (300), wobei das Verfahren umfasst:
Entscheidenden, von einer ersten Kommunikationsressource, welche einem ersten Identifizierer entspricht, zu einer zweiten Kommunikationsressource, welche einem zweiten Identifizierer entspricht, umzuschalten; und
Rundsenden [Broadcasting] eines Ressourcenwechselsignals, welches einen Wechsel von der Verwendung einer ersten Kommunikationsressource zu einer zweiten Kommunikationsressource anzeigt, **gekennzeichnet dadurch, dass** das Rundsenden des Ressourcenwechselsignals das Übertragen des Rundsenden-Ressourcenwechselsignals auf der zweiten Kommunikationsressource umfasst.

2. Verfahren nach Anspruch 1, wobei das Rundsenden des Ressourcenwechselsignals das Übertragen des Rundsenden-Ressourcenwechselsignals auf der ersten Kommunikationsressource umfasst.

3. Verfahren nach Anspruch 2, wobei das Ressourcenwechselsignal das letzte Signal ist, welches auf der ersten Kommunikationsressource durch das Kommunikationsgerät (300) übertragen wird.

4. Verfahren nach Anspruch 1, wobei das Ressourcenwechselsignal das erste Signal ist, welches auf der zweiten Kommunikationsressource durch das Kommunikationsgerät (300) übertragen wird.

5. Verfahren nach Anspruch 4, wobei das Rundsenden des Ressourcenwechselsignals weiter das Übertragen des Rundsenden-Ressourcenwechselsignals auf der ersten Kommunikationsressource umfasst, so dass das Rundsenden-Ressourcenwechselsignal auf sowohl der ersten als auch der zweiten Kommunikationsressource übertragen wird.

6. Kommunikationsgerät (300), umfassend:
Mittel (428) zum Entscheiden, zwischen einer ersten Kommunikationsressource, welche einem ersten Identifizierer zugeordnet ist, und einer zweiten Kommunikationsressource, welche einem zweiten Identifizierer entspricht, umzuschalten; und
Mittel (438) zum Rundsenden eines Ressourcenwechselsignals, welches einen Wechsel von der Verwendung einer ersten Kommunikationsressource zu einer zweiten Kommunikationsressource anzeigt, **gekennzeichnet dadurch, dass** das Mittel (438) zum Rundsenden des Ressourcenwechselsignals Mittel (442) zum Übertragen des Rundensenden-Ressourcenwechselsignals auf der zweiten Kommunikationsressource umfasst.

7. Kommunikationsgerät (300) nach Anspruch 6, wobei das Mittel (438) zum Rundsenden des Ressourcenwechselsignals Mittel (440) zum Übertragen des Rundensenden-Ressourcenwechselsignals auf der ersten Kommunikationsressource umfasst.

8. Kommunikationsgerät (300) nach Anspruch 7, wobei das Ressourcenwechselsignal das letzte Signal ist, welches auf der ersten Kommunikationsressource durch das Kommunikationsgerät (300) übertragen wird.

9. Kommunikationsgerät (300) nach Anspruch 6, wobei das Ressourcenwechselsignal das erste Signal ist, welches auf der zweiten Kommunikationsressource durch das Kommunikationsgerät (300) übertragen wird.

10. Kommunikationsgerät (300) nach Anspruch 9, wobei das Mittel (438) zum Rundsenden des Ressourcenwechselsignals weiter Mittel (440) zum Übertragen des Rundensenden-Ressourcenwechselsignals auf der ersten Kommunikationsressource umfasst, so dass das Rundensenden-Ressourcenwechselsignal sowohl auf der ersten Kommunikationsressource als auch auf der zweiten Kommunikationsressource übertragen wird.

11. Kommunikationsgerät (300) nach Anspruch 6, umfassend:
Wenigstens einen Prozessor (302), welcher dazu eingerichtet ist, die Mittel (428) zum Entscheiden, von einer ersten Kommunikationsressource zu einer zweiten Kommunikationsressource zu schalten, und die Mittel (438) zum Rundsenden eines Ressourcenwechselsignals an die zweite Kommunikationsressource zu implementieren; und einen Speicher (304), welcher mit dem wenigstens einen Prozessor (302) gekoppelt ist.

12. Kommunikationsgerät (300) nach Anspruch 11, wobei der wenigstens eine Prozessor (302) als Teil der Einrichtung dazu, das Ressourcenwechselsignal rundzusenden, dazu eingerichtet ist, das Rundensenden-Ressourcenwechselsignal auf der ersten Kommunikationsressource zu übertragen.

13. Kommunikationsgerät (300) nach Anspruch 12, wobei das Ressourcenwechselsignal das letzte Signal ist, welches auf der ersten Kommunikationsressource durch das Kommunikationsgerät (300) übertragen wird.

14. Kommunikationsgerät (300) nach Anspruch 11, wobei das Ressourcenwechselsignal das erste Signal ist, welches auf der zweiten Kommunikationsressource durch das Kommunikationsgerät (300) übertragen wird, insbesondere wobei der wenigstens eine Prozessor (302) als Teil der Einrichtung dazu, das Ressourcenwechselsignals rundzusenden, weiter dazu eingerichtet ist, auf der ersten Kommunikationsressource zu übertragen, so dass das Rundsenden-Ressourcenwechselsignal sowohl auf der ersten Kommunikationsressource als auch auf der zweiten Kommunikationsressource übertragen wird.

15. Computerlesbares Medium (304), umfassend Code zum Durchführen der Schritte nach irgendeinem der Ansprüche 1 - 5, wenn diese auf einem Computer ausgeführt werden.

## Revendications

1. Un procédé de mise en oeuvre d'un dispositif de communication (300), le procédé comprenant :
la décision de commuter d'une première ressource de communication correspondant à un premier identifiant vers une seconde ressource de communication correspondant à un second identifiant ; et
la multidiffusion d'un signal de changement de ressource indiquant un changement de l'utilisation de la première ressource de communication vers la seconde ressource de communication, **caractérisé en ce que** ladite multidiffusion du signal de changement de ressource comprend l'émission du signal de changement de ressource de multidiffusion sur la seconde ressource de communication.

2. Le procédé de la revendication 1, dans lequel la multidiffusion du signal de changement de ressource comprend l'émission du signal de changement de ressource de multidiffusion sur la première ressource de communication.

3. Le procédé de la revendication 2, dans lequel ledit signal de changement de ressource est le dernier signal émis sur ladite première ressource de communication par ledit dispositif de communication (300).

4. Le procédé de la revendication 1, dans lequel ledit signal de changement de ressource est le premier signal émis sur ladite seconde ressource de communication par ledit dispositif de communication (300).

5. Le procédé de la revendication 4, dans lequel la multidiffusion du signal de changement de ressource comprend en outre l'émission du signal de changement de ressource multidiffusé sur la première ressource de communication de sorte que le signal de changement de ressource multidiffusé soit émis à la fois sur la première et sur la seconde ressource de communication.

6. Un dispositif de communication (300), comprenant :
des moyens (428) de décision de commuter d'une première ressource de communication correspondant à un premier identifiant vers une seconde ressource de communication correspondant à un second identifiant ; et
des moyens (438) de multidiffusion d'un signal de changement de ressource indiquant un changement de l'utilisation de la première ressource de communication vers la seconde ressource de communication, **caractérisé en ce que** lesdits moyens (438) de multidiffusion du signal de changement de ressource comprennent des moyens (442) d'émission du signal de changement de ressource de multidiffusion sur la seconde ressource de communication.

7. Le dispositif de communication (300) de la revendication 6, dans lequel lesdits moyens (438) de multidiffusion du signal de changement de ressource comprennent des moyens (440) d'émission du signal de changement de ressource de multidiffusion sur la première ressource de communication.

8. Le dispositif de communication (300) de la revendication 7, dans lequel ledit signal de changement de ressource est le dernier signal émis sur ladite première ressource de communication par ledit dispositif de communication (300).

9. Le dispositif de communication (300) de la revendication 6, dans lequel ledit signal de changement de ressource est le premier signal émis sur ladite seconde ressource de communication par ledit dispositif de communication (300).

10. Le dispositif de communication (300) de la revendication 9, dans lequel lesdits moyens (438) de multidiffusion du signal de changement de ressource comprennent en outre des moyens (440) d'émission du signal de changement de ressource multidiffusé sur la première ressource de communication de sorte que le signal de changement de ressource multidiffusé soit émis à la fois sur la première et sur la seconde ressource de communication.

11. Le dispositif de communication (300) de la revendication 6, comprenant :
au moins un processeur (302) configuré pour implémenter lesdits moyens (428) de décision de commutation d'une première ressource de communication vers une seconde ressource de communication et lesdits moyens (438) de multidiffusion d'un signal de changement de ressource vers la seconde ressource de communication ; et
une mémoire (304) couplée audit au moins un processeur (302).

12. Le dispositif de communication (300) de la revendication 11, dans lequel ledit au moins un processeur (302) est configuré pour émettre le signal de changement de ressource multidiffusé sur la première ressource de communication partiellement comme étant configuré pour multidiffuser le signal de changement de ressource.

13. Le dispositif de communication (300) de la revendication 12, dans lequel ledit signal de changement de ressource est le dernier signal émis sur ladite première ressource de communication par ledit dispositif de communication (300).

14. Le dispositif de communication (300) de la revendication 11, dans lequel ledit signal de changement de ressource et le premier signal émis sur ladite seconde ressource de communication par ledit dispositif de communication (300), en particulier dans lequel ledit au moins un processeur (302) est en outre configuré pour émettre sur la première ressource de communication de sorte que le signal de changement de ressource multidiffusé soit émis à la fois sur la première ressource de communication et sur la seconde ressource de communication partiellement comme étant configuré pour multidiffuser le signal de changement de ressource.

15. Un support lisible par calculateur (304) comprenant du code pour mettre en oeuvre les étapes selon l'une des revendications 1 à 5 lorsqu'il est exécuté sur un calculateur.
